# EUROPEAN PATENT APPLICATION

(11) **EP 4 148 268 A1**
(43) Date of publication of application: **15.03.2023**
(21) Application number: 21876872.9
(22) Date of filing: 26.05.2021
(51) Int. Cl.: F03D 1/04, F03D 7/04, F03D 13/25, B63B 35/44

(54) **FLOATING WIND POWER GENERATOR UNIT**

(30) Priority: 10.10.2020 CN 202011079262
(71) Applicant: Ming Yang Smart Energy Group Limited, Zhongshan, Guangdong 528437 (CN)
(72) Inventor: ZHANG, Qiying, Zhongshan, Guangdong 528437 (CN); ZOU, Libing, Zhongshan, Guangdong 528437 (CN); HUO, Shihuan, Zhongshan, Guangdong 528437 (CN); WU, Di, Zhongshan, Guangdong 528437 (CN); ZHOU, Mingjun, Zhongshan, Guangdong 528437 (CN); REN, Yong, Zhongshan, Guangdong 528437 (CN); LIU, Fanying, Zhongshan, Guangdong 528437 (CN); MA, Chong, Zhongshan, Guangdong 528437 (CN); LI, Gang, Zhongshan, Guangdong 528437 (CN); ZHAO, Chunyu, Zhongshan, Guangdong 528437 (CN); LU, Jun, Zhongshan, Guangdong 528437 (CN); WANG, Chao, Zhongshan, Guangdong 528437 (CN); CHEN, Sifang, Zhongshan, Guangdong 528437 (CN); WEI, Yufeng, Zhongshan, Guangdong 528437 (CN)
(74) Representative: Arnold & Siedsma
(86) International application number: PCT/CN2021/096077
(87) International publication number: WO 2022/073349

(57) **Abstract**

A floating wind power generator unit, comprising: a wind deflector (1), a floating plate (2), an angle adjustment mechanism (21), a floating base (22), and a tower (23), wherein the floating base (22) is provided with a mounting position (24), the tower (23) is mounted at the mounting position (24) and is provided with a wind rotor (18), the floating plate (2) is substantially horizontally mounted on the floating base (22), the wind deflector (1) is hinged to the floating plate (2), the opening between the wind deflector (1) and the floating plate (2) faces the tower (23), and the angle adjustment mechanism (21) is operably connected to the wind deflector (1) to adjust the included angle between the wind deflector (1) and the floating plate (2). The provision of a wind deflecting structure comprising the wind deflector, floating plate, and angle adjustment mechanism allows for deflection and disturbance of wind within a certain height range on the sea surface to guide more wind to flow to the blowing area of the wind rotor, thereby improving wind energy capture efficiency, thus increasing the amount of power generated.

## Description

### TECHNICAL FIELD

The present disclosure relates to a field of wind power generation, in particular to a floating wind turbine.

### BACKGROUND

Conventional wind turbine structure is a single rotor active yaw system, and an efficiency of wind energy capture is low. In addition, in a wind turbine with a conventional fixed foundation, the fixed foundation occupies a small area and cannot support an installation of a large wind guiding structure.

### SUMMARY

The purpose of the present disclosure is to provide a floating wind turbine with a wind guiding structure in order to overcome above shortcomings of the prior art.

The purpose of the present disclosure is achieved through the following technical solution. A floating wind turbine includes: a wind deflector, a floating board, an angle adjustment mechanism, a floating foundation, and a tower, wherein the floating foundation is provided with a mounting position, the tower is mounted to the mounting position and the tower is provided with a wind rotor, the floating board is substantially horizontally mounted to the floating foundation, the wind deflector is hinged to the floating board, an opening between the wind deflector and the floating board faces the tower, and the angle adjustment mechanism is operably connected to the wind deflector to adjust an angle between the wind deflector and the floating board.

In one of the embodiments, the wind deflector includes two or more sub-boards, and each of the sub-boards is hinged to the floating board, the angle adjustment mechanism includes two or more sub-angle adjustment mechanisms, and each of the sub-boards is operably connected to the corresponding sub-angle adjustment mechanism.

In one of the embodiments, the tower is an airfoil tower, the airfoil tower includes a support arm, a first airfoil arm and a second airfoil arm provided at an upper end of the support arm, a lower end of the support arm is mounted on the mounting position, the wind rotor includes a first wind rotor provided on the first airfoil arm and a second wind rotor provided on the second airfoil arm, the wind deflector includes a first sub-board and a second sub-board, the first sub-board and the second sub-board are respectively hinged to the floating board, the first sub-board corresponds to the first wind rotor, the second sub-board corresponds to the second wind rotor, the angle adjustment mechanism includes a first sub-angle adjustment mechanism and a second sub-angle adjustment mechanism, the first sub-angle adjustment mechanism is operably connected to the first sub-board to adjust the angle between the first sub-board and the floating board, the second sub-angle adjustment mechanism is operably connected to the second sub-board to adjust the angle between the second sub-board and the floating board.

In one of the embodiments, the floating foundation includes a first floating arm, a second floating arm, and a third floating arm that are connected in a Y shape, a length of the first floating arm is greater than that of the second floating arm or the third floating arm, the mounting position is provided at a joint of the first floating arm, the second floating arm, and the third floating arm, the tower is mounted on the mounting position obliquely.

In one of the embodiments, the floating board is mounted to the first floating arm, the floating board is arranged symmetrically with respect to the first floating arm such that the floating board includes a first floating board area located on one side of the first floating arm and a second floating board area located on the other side of the first floating arm, the first sub-board is hinged to the first floating board area through a first hinge shaft, and the second sub-board is hinged to the second floating board area through a second hinge shaft.

In one of the embodiments, the first hinge shaft and the second hinge shaft are coaxially arranged.

In one of the embodiments, the floating wind further includes at least one first buoy mounted below the floating board.

In one of the embodiments, the floating board includes a plurality of flat boards arranged uniformly and coplanarly.

In one of the embodiments, the angle between the wind deflector and the floating board is in a range from 10° to 50°.

In one of the embodiments, the angle adjustment mechanism is mounted between the floating board and the wind deflector, the angle adjustment mechanism includes a hydraulic cylinder, a base, a connecting block, a first support rod, and a second support rod, the base is mounted to a hinge shaft between the wind deflector and the floating board, the hydraulic cylinder is mounted to the base, a telescopic rod of the hydraulic cylinder faces the tower, the connecting block is mounted to the telescopic rod of the hydraulic cylinder, both ends of the first support rod are hinged to the connecting block and the floating board, respectively, both ends of the second support rod are hinged to the connecting block and wind deflector, respectively.

In one of the embodiments, a plurality of the hydraulic cylinders, the connecting blocks, the first support rods, and the second support rods are provided, the plurality of hydraulic cylinders are connected in sequence, the connecting block is fixed to the telescopic rod of each hydraulic cylinder, each of the connecting blocks is connected to the floating board and the wind deflector through the corresponding first support rod and the second support rod.

In one of the embodiments, each of the sub-boards is a flat board or a curved board.

In one of the embodiments, the angle adjustment mechanism is mounted between the tower and the wind deflector, and the angle adjustment mechanism includes a frame, a steel cable, and a hoist, the frame is mounted to both sides of the wind deflector, a first side of the frame is hinged to the floating board, a second side of the frame opposite to the first side has a steel cable connection point, the tower is provided with a steel cable through hole corresponding to the steel cable connection point, the hoist is mounted in the tower, one end of the steel cable is fixed to the steel cable connection point, the other end of the steel cable extends though the steel cable through hole and is connected to the hoist.

In one of the embodiments, the wind deflector is made of canvas material.

In one of the embodiments, the floating wind turbine further includes an engine room and the wind rotor, the engine room is mounted to an end of the tower respectively, the wind rotor is mounted to an end of the engine room away from the wind deflector.

Compared with the prior art, the present disclosure has the following advantages.

First, by a wind guiding structure including such as the wind deflector, the floating board, and the angle adjustment mechanism, wind within a certain height range on a sea surface can be guided and disturbed through a wind deflecting structure including the wind deflector, the floating board, and the angle adjustment mechanism, so that more wind flows to a swept area of the wind rotor, in this way, a wind energy capture efficiency can be improved, and a power generation can be increased. In addition, the floating board interacts with the sea water to increase a damping of the floating foundation's movement under an action of ocean waves, thereby effectively suppressing a swaying motion of the floating foundation and increasing a stability of the floating foundation.

Second, a swing angle of the wind deflector can be adjusted though the angle adjustment mechanism. When a wind speed is small, the wind deflector can be opened to a maximum angle to absorb wind energy to a maximum extent. When the wind speed continuously and stably exceeds a rated wind speed of the floating wind turbine, especially when extreme wind conditions such as typhoons occur, the wind deflector can be closed to a minimum angle, so that a wind blocking area is significantly reduced, a wind load on the floating foundation and the wind deflector of the wind turbine is greatly reduced, thereby ensuring a safety of the structure. In other wind speed conditions, the angle can be controlled according to the wind load on the wind deflector, according to a design requirement, the load can be reduced by reducing the angle of the wind deflector to ensure the safety of the floating foundation and a mooring system. When the wind turbine deviates from a wind direction, a state of different wind deflectors can be adjusted according to a direction of the deviation, for example, one part of the wind deflector is retracted, and the other part of the wind deflector is kept open to receive wind resistance load, thereby, an eccentric moment is generated to assist the wind turbine to rotate around an anchor point with a turret bearing at an end of the floating foundation located in a upwind direction, so as to assist the yaw to wind.

Third, the wind deflector can be a combination of multiple flat boards or curved boards and a frame structure, and suitable metal or non-metallic materials that meet environmental and strength requirements can be selected to facilitate project implementation. The wind guiding structure can be applied to floating wind turbines with double wind rotor or single wind rotor. The wind guiding structure can be combined with a Y-shaped floating foundation, the structure is compact and a load transmission path is shortened, which is conducive to lightweight design.

### BRIEF DESCRIPTION OF THE DRAWINGS

The drawings that form a part of the present disclosure are used to provide further understanding of the present disclosure, and exemplary embodiments and descriptions of the present disclosure are used to explain the present disclosure and not intended to limit the present disclosure. In the drawings:
FIG. 1 is a side view of a wind guiding structure according to a first embodiment of the present disclosure.
FIG. 2 is a schematic view of the wind guiding structure of FIG. 1 after an angle is adjusted.
FIG. 3 is a schematic view of a floating wind turbine according to the first embodiment of the present disclosure.
FIG. 4 is a side view of FIG. 3.
FIG. 5 is a schematic view of the floating wind turbine in FIG. 3 after an angle of the floating board is adjusted.
FIG. 6 is a side view of a wind guiding structure according to a second embodiment of the present disclosure.
FIG. 7 is a front view of a wind guiding structure according to the second embodiment of the present disclosure.
FIG. 8 is a schematic view of the floating wind turbine according to the second embodiment of the present disclosure.
FIG. 9 is a side view of FIG. 8.

In the drawings: 1 represents wind deflector; 2 represents floating board; 3 represents floating arm; 4 represents first buoy; 5 represents hydraulic cylinder; 6 represents base; 7 represents connecting block; 8 represents support rod; 10 represents frame; 11 represents steel cable; 12 represents panel board made of canvas; 13 represents steel cable connection point; 14 represents steel cable through hole; 15 represents airfoil arm; 16 represents support arm; 17 represents engine room; 18 represents wind rotor; 19 represents cable; 20 represents second buoy; 21 represents angle adjustment mechanism; 22 represents floating foundation; 23 represents tower; 24 represents mounting position; 25 represents telescopic rod; 29 represents stay cable; 81 represents first support rod; 82 represents second support rod; 100 represents floating wind turbine; 111 represents first sub-board; 112 represents second sub-board; 151 represents first airfoil arm; 152 represents second airfoil arm; 181 represents first wind rotor; 182 represents second wind rotor; 201 represents first floating board area; 202 represents second floating board area; 211 represents first sub-angle adjustment mechanism; 212 represents second sub-angle adjustment mechanism; 221 represents first floating arm; 222 represents second floating arm; 223 represents third floating arm; 231 represents first hinge shaft; 232 represents second hinge shaft.

### DETAILED DESCRIPTION OF THE EMBODIMENTS

The present disclosure is further described below with reference to the accompanying drawings and embodiments.

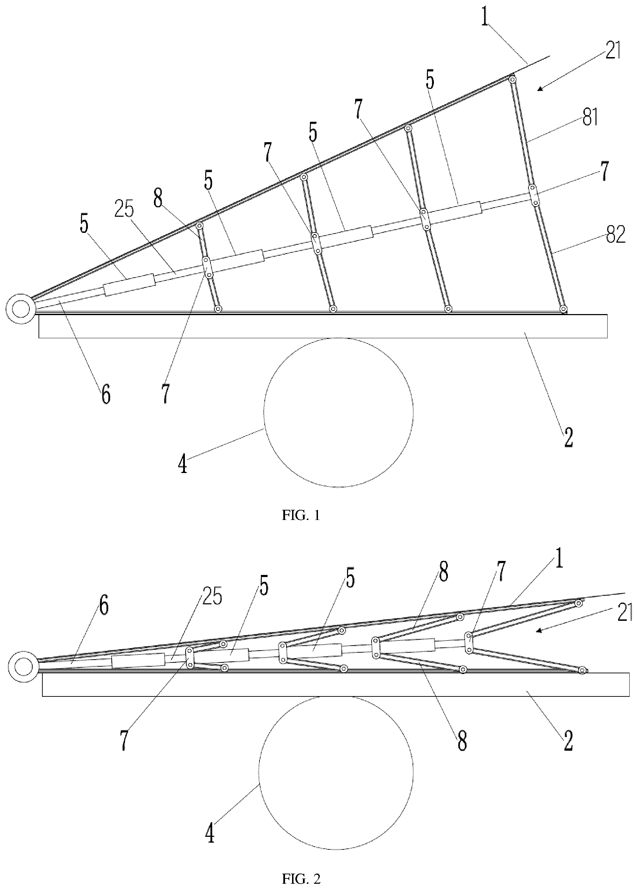

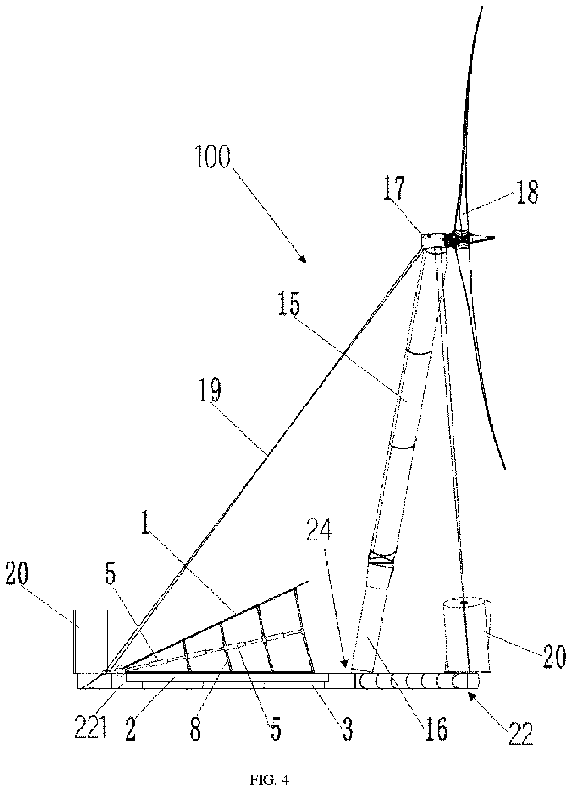

FIGS. 1 to 5 show a floating wind turbine 100 according to an embodiment of the present disclosure, including a wind deflector 1, a floating board 2, an angle adjustment mechanism 21, a floating foundation 22 and a tower 23. The floating foundation 22 is provided with a mounting position 24, the tower 23 is mounted at the mounting position 24 and the tower 23 is provided with a wind rotor 18. The floating board 2 is substantially horizontally mounted to the floating foundation 22, the wind deflector 1 is hinged to the floating board 2, and an opening between the wind deflector 1 and the floating board 2 faces the tower 23. The angle adjustment mechanism 21 is operably connected to the wind deflector 1 to adjust an angle between the wind deflector 1 and the floating board 2. The wind deflector 1, the floating board 2, and the angle adjustment mechanism 21 cooperatively constitute a wind guiding structure. However, it should be noted that, according to design requirements and other needs, the wind guiding structure may also include other components or adopt other structures.

The above-mentioned wind guiding structure can guide and disturb the wind within a certain height range on a sea surface, so that more wind flow blows into a swept area of the wind rotor 18, thereby improving a wind energy capture efficiency, and increasing a generated electrical energy. In some other embodiments, the wind deflector 1 and the floating board 2 may also be supported by a fixed bracket, so that the angle of the wind deflector 1 relative to the floating board 2 is a constant value.

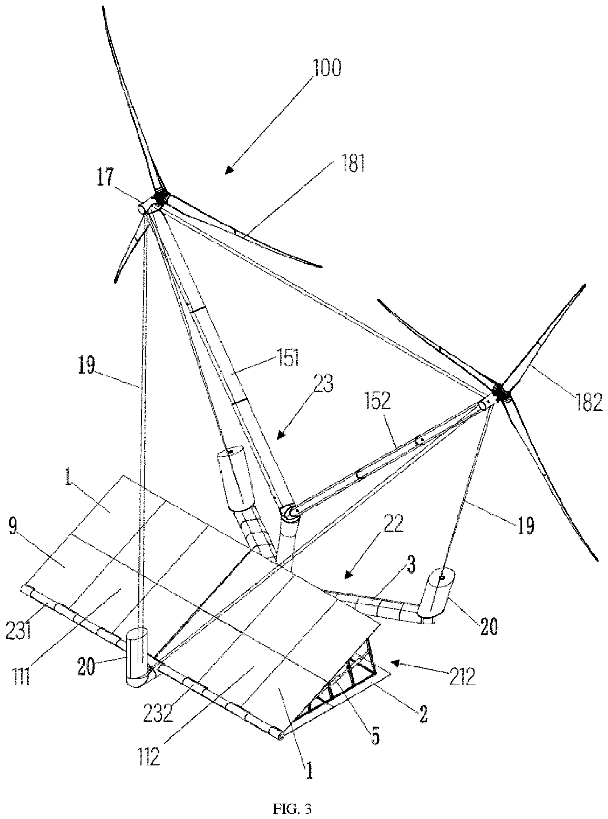

Referring to FIG. 3, in some embodiments, the tower 23 may be an airfoil tower. The airfoil tower includes a support arm 16 and two airfoil arms 15 located at an upper end of the support arm 16, more specifically, the two airfoil arms 15 are a first airfoil arm 151 and a second airfoil arm 152. A lower end of the support arm 16 is mounted at the mounting position 24. The wind rotor 18 may include a first wind rotor 181 provided on the first airfoil arm 151 and a second wind rotor 182 provided on the second airfoil arm 152. It should be understood that the first wind rotor 181 and the second wind rotor 182 can be driven by wind to rotate, so that wind energy can be converted into electrical energy.

In some embodiments, the wind deflector 1 may include two or more sub-boards that are hinged to the floating board 2, respectively. The angle adjustment mechanism 21 may include two or more sub-angle adjustment mechanisms, each sub-board is operably connected to the corresponding sub-angle adjustment mechanism.

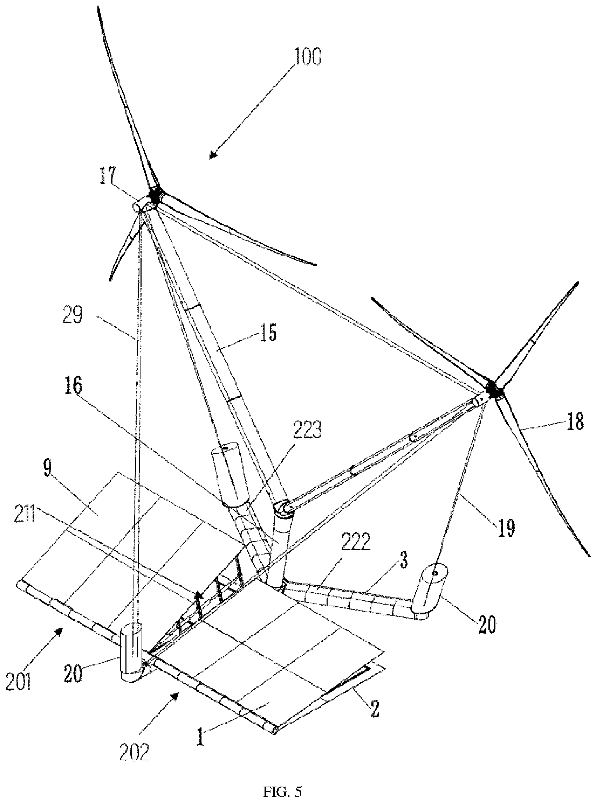

Referring to FIGS. 3 and 5, in this embodiment, the wind deflector 1 may include a first sub-board 111 and a second sub-board 112 that are hinged to the floating board 2, respectively. The first sub-board 111 may correspond to the first wind rotor 181 to guide the wind to the first wind rotor 181. The second sub-board 112 may correspond to the second wind rotor 182 to guide wind force toward the second wind rotor 182. In addition, the angle adjustment mechanism 21 may include a first sub-angle adjustment mechanism 211 and a second sub-angle adjustment mechanism 212. The first sub-angle adjustment mechanism 211 is operably connected to the first sub-board 111 to adjust an angle between the first sub-board 111 and the floating board 2, the second sub-angle adjustment mechanism 212 is operably connected to the second sub-board 112 to adjust an angle between the second sub-board 112 and the floating board 2.

In this way, by configuring the angle adjustment mechanism 21 to include the first sub-angle adjustment mechanism 211 and the second sub-angle adjustment mechanism 212, swing angles of the first sub-board 111 and the second sub-board 112 can be adjusted independently. When the wind turbine deviates from a wind direction, according to a direction deviating from the wind direction, by adjusting respective stretching/folding states of the first sub-board 111 and the second sub-board 112, an eccentric moment is generated to assist the wind turbine to rotate around an anchor point with a turret bearing at an end of the floating foundation 22 located in an upwind direction, so as to assist the yaw to wind. In some embodiments, a small gap may be provided between the two wind deflectors, when the swing angle of the first sub-board 111 or the second sub-board 112 is adjusted independently, the first sub-board 111 and the second sub-board 112 will not affect each other.

Referring to FIG. 5, the floating foundation 22 may include a first floating arm 221, a second floating arm 222, and a third floating arm 223 that are connected in a Y shape. A length of the first floating arm 221 may be greater than that of the second floating arm 222 and the third floating arm 223. The mounting position 24 is provided at a joint between the first floating arm 221, the second floating arm 222, and the third floating arm 223, the tower 23 is preferably mounted at the mounting position 24 obliquely.

The floating board 2 may be mounted to the first floating arm 221. The floating board 2 may be symmetrically arranged with respect to the first floating arm 221, so that the floating board 2 includes a first floating board area 201 located on one side of the first floating arm 221 and a second floating board area 202 located on the other side of a floating arm 221. The first sub-board 111 and the first floating board area 201 can be hinged through a first hinge shaft 231, the second sub-board 112 and the second floating board area 202 can be hinged through a second hinge shaft 232. In some embodiments, the first hinge shaft 231 and the second hinge shaft 232 may be coaxially arranged.

In some embodiments, the floating wind turbine 100 may further include at least one first buoy 4, the at least one first buoy 4 is mounted, for example, below the floating board 2. For example, the first buoy 4 may be symmetrically mounted to a lower surface of the floating board 2 along the first floating arm 221. The first buoy 4 cooperates with the floating board 2 to improve a floating performance of the overall wind guiding structure.

In some embodiments, the angle between the wind deflector 1 (for example, each sub-board of the wind deflector 1) and the floating board 2 is in a range from 10° to 50°. The swing angle of the wind deflector 1 can be adjusted by the angle adjustment mechanism 21, the swing range of the wind deflector 1 can be adjusted to be 10° to 50°.

In some embodiments, the wind deflector 1 (each sub-board of the wind deflector 1) may include a plurality of flat boards 9 or curved boards arranged uniformly and coplanarly. The wind deflector 1 can be made in pieces, each sub-board can be spliced by a plurality of small boards on a frame structure as needed. A material of a board surface of each small board can be made of steel plate or glass steel plate or other metal or non-metallic material, which can meet environmental conditions and strength requirements. A shape of the board surface can be made into a straight line or a curved shape to enhance the wind guiding effect. The specific shape of the curved board surface is determined according to the design requirements. In some embodiments, both the first sub-board 111 and the second sub-board 112 may be flat boards or curved boards.

In some embodiments, the floating board 2 may include a plurality of the flat boards 9 arranged uniformly. The floating board 2 floats on the sea surface and is configured to support a weight of the wind deflector 1 and a support frame. The floating board 2 can be a closed flat board surrounded by a plurality of the flat boards 9, or can be a flat board with holes configured to locate the first buoy 4. The first buoy 4 cooperates with the floating board 2, which can improve the floating performance of the wind deflector 1 and prolong a service life of the wind deflector 1.

As shown in FIG. 1 and FIG. 2, in this embodiment, the angle adjustment mechanism 21 can be mounted between the floating board 2 and the wind deflector 1. For example, the angle adjustment mechanism 21 includes a hydraulic cylinder 5, a base 6, a connecting block 7, and a support rod 8 (including a first support rod 81 and a second support rod 82). For example, the base 6 is mounted to the hinge shaft between each sub-board (the first sub-board 111 and the second sub-board 112) of the wind deflector 1 and the floating board 2. The hydraulic cylinder 5 is mounted to the base 6. A telescopic rod 25 of the hydraulic cylinder 5 faces the tower 23. The connecting block 7 is mounted to the telescopic rod 25 of the hydraulic cylinder 5. Both ends of the first support rod 81 are hinged to the connecting block 7 and the floating board 2, respectively, and both ends of the second support rod 82 are hinged with connecting block 7 and wind deflector 1, respectively.

In some embodiments, in one angle adjustment mechanism 21, a plurality of hydraulic cylinders 5, the connecting blocks 7, the first support rods 81, and the second support rods 82 may be provided. For example, the plurality of hydraulic cylinders 5 are connected in sequence, the connecting block 7 is fixed to the telescopic rod 25 of each hydraulic cylinder 5. Each of the connecting blocks 7 is connected to the floating board 2 and the wind deflector 1 through the corresponding first support rod 81 and second support rod 82.

As shown in FIG. 3 and FIG. 5, the telescopic movement of the hydraulic cylinder 5 enables the first support rod 81 and the second support rod 82 to rotate around a hinge point at an end thereof, so that the first support rod 81 and the second support rod 82 are stretched or folded, thus the angle between the sub-board (the first sub-board 111 or the second sub-board 112) corresponding to the angle adjustment mechanism 21 and the floating board 2 is changed. In some embodiments, the angle adjustment mechanism 21 is provided between the first sub-board 111 and the floating board 2 and between the second sub-board 112 and the floating board 2, (for example, the angle adjustment mechanism 21 corresponding to the first sub-board 111 is referred to as a first sub-angle adjustment mechanism 211, and the angle adjustment mechanism 21 corresponding to the second sub-board 112 is referred to as a second sub-angle adjustment mechanism 212), so that the swing angles of the first sub-board 111 or the second sub-board 111 can be adjusted independently.

By providing the angle adjustment mechanism 21, the angle of the wind deflector 1 can be adjusted by hydraulic drive. When a wind speed is too large, by reducing an opening angle of the wind deflector 1, a wind blocking area is reduced, thereby reducing the wind load on the wind deflector 1. Especially under extreme wind speed conditions such as typhoon, a design difficulty of a support structure of the wind deflector 1 and a foundation mooring system of the wind turbine is significantly reduced, and the structural safety is ensured. By providing the first sub-angle adjustment mechanism 211 and the second sub-angle adjustment mechanism 212, the first sub-board 111 or the second sub-board 112 can be retracted independently, so that wind resistances of the first sub-board 111 and the second sub-board 112 are different, thereby the eccentric moment is generated to assist the yaw of the floating wind turbine 100 to face the wind, improve the accuracy of facing to the wind, and thereby increase the power generation.

By providing the plurality of hydraulic cylinders 5 and the support rod 8 that cooperate with each other, an angle adjustment accuracy and a support stability can be improved. In use, a hydraulic power unit may be provided inside the second buoy 20 of the floating foundation 22 and connected to the hydraulic cylinder 5 through a pipeline.

In some embodiments, the floating wind turbine 100 may further include an engine room 17, the engine room 17 is mounted to an end of the tower 23 respectively. The wind rotor 18 is mounted to an end of the engine room 17 away from the wind deflector 1.

A shape of the airfoil arm 15 is similar to a wing of an airplane, wind resistance can be reduced by this arrangement. In order to improve the stability of the tower 23, the airfoil arm 15 may also have a predetermined cable connection point, the cable connection point and the floating foundation 22 are pre-tightenedly connected through a cable 19 to improve stability. In this embodiment, both the floating foundation 22 and the tower 23 are Y-shaped, which reserves the mounting position for the wind guiding structure. The wind guiding structure is mounted on the floating wind turbine 100, when the lower wind blows through the wind deflector 1, the wind will flow obliquely upward under a guidance of the wind deflector 1 and accelerate to flow toward the swept area of the two wind rotors 18, so that an airflow velocity and density in the swept area of the two wind rotors 18 are increased, and the wind energy capture capability of the wind rotors 18 is greatly increased, thereby significantly improving the generated electrical energy of the wind turbine 100. In some embodiments, the first floating arm 221 is located in the upwind direction, the second floating arm 222 and the third floating arm 223 are located in a downwind direction.

An inclined direction of the support arm 16 may be a direction away from the first floating arm 221. The support arms 15, 16, the engine room 17 and the wind rotor 18 are moved to the inclined direction as a whole. A thrust generated by the wind acting on the wind rotor 18 and the support arm 16 increases relative to a distance from the anchor point at the end of the floating foundation, thereby increasing the yaw restoring moment generated by the wind thrust, which is conducive to the realization of passive yaw to wind.

In some embodiments, the floating wind turbine 100 may also include the cables 19 and a plurality of second buoys 20. Each cable 19 may be a steel strand. The second buoys 20 can be respectively mounted on the other ends of the three floating arms 3 (the first floating arm 221, the second floating arm 222, and the third floating arm 223), each of the second buoys 20 can be connected to the corresponding engine room 17 through the cable 19. The two obliquely arranged airfoil arms 15 can ensure stability though the stay cables 29.

In some embodiments, an inside of the floating arm 3 may have a cavity. Water can be injected into the cavity to increase a buoyancy of the floating foundation 22.

### Second embodiment:

This embodiment is a modification of the above-mentioned first embodiment. Compared with the above-mentioned first embodiment, this embodiment mainly has the following differences. If there is no conflict, other features of this embodiment can be substantially the same as those of first embodiment.

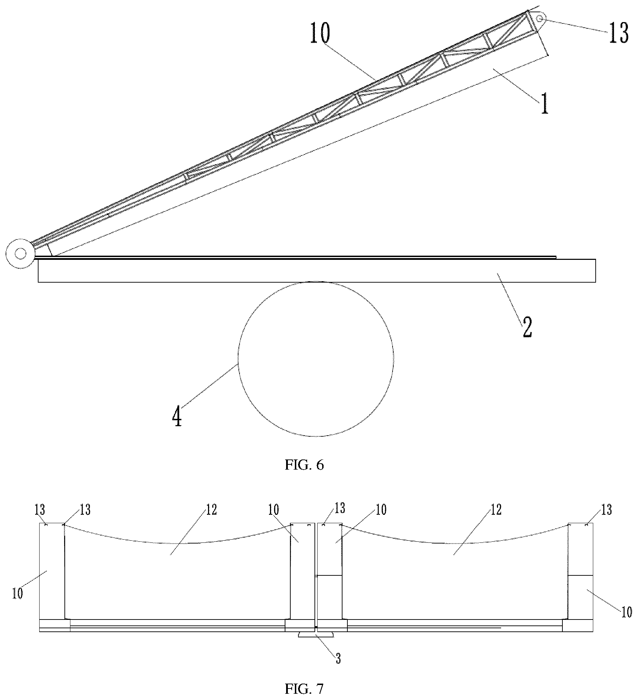

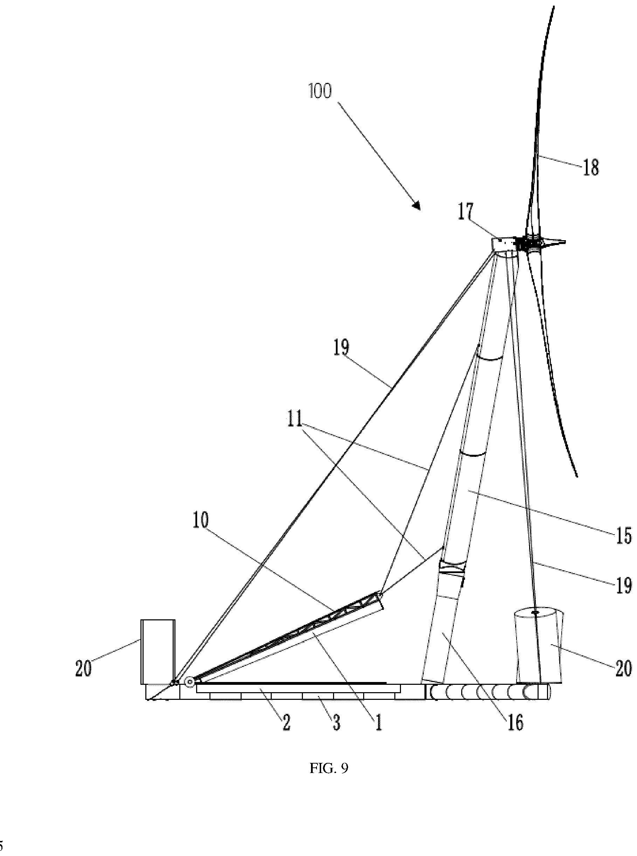

As shown in FIGS. 6 to 9, in this embodiment, the angle adjustment mechanism 21 can be mounted between the tower 23 and the wind deflector 1. The angle adjustment mechanism 21 includes a frame 10, a steel cable 11, and a hoist (not shown). The frame 10 is mounted to both sides of the wind deflector 1, a first side of the frame 10 is hinged to the floating board 2, and a second side of the frame 10 opposite to the first side has a steel cable connection point 13. The tower 23 is provided with a steel cable through hole 14 corresponding to the steel cable connection point 13, the hoist is mounted in the tower 23, one end of the steel cable 11 is fixed to the steel cable connection point 13, the other end of the steel cable 11 extends though the steel cable through hole 14 and is connected to the hoist.

In this embodiment, each sub-board (the first sub-board 111 and the second sub-board 112) of the wind deflector 1 can be made of canvas material to form a panel board. The panel board made of canvas is fixed to the frame 10 of each sub-board. The frames 10 on both sides of each sub-board of the wind deflector 1 can be made of steel, one end of each frame 10 can be hinged to the floating board 2, and the other end of each frame 10 can be connected to the steel cable 11. The panel board made of canvas is fixed to the frame 10, and forms a curved surface as a wind guiding surface under an action of wind load. In other embodiments, each sub-board of the wind deflector 1 is not limited to be composed of canvas and the frame 10. In addition, sub-boards composed of canvas and frame 10 can be used in the fixed wind deflector. In addition, the sub-board composed of canvas and the frame 10 can also be used in the above-mentioned first embodiment.

In this embodiment, the swing angle of each sub-board of the wind deflector 1 is adjusted by driving the hoisting steel cable, so that elements such as the hydraulic cylinder 5 and the support rod 8 in the above-mentioned first embodiment can be omitted. In this embodiment, two groups of steel cables 11 are used to pull each sub-board obliquely, and each group of steel cables 11 is driven by the hoist, so as to adjust the swing angle of each sub-board of the wind deflector 1.

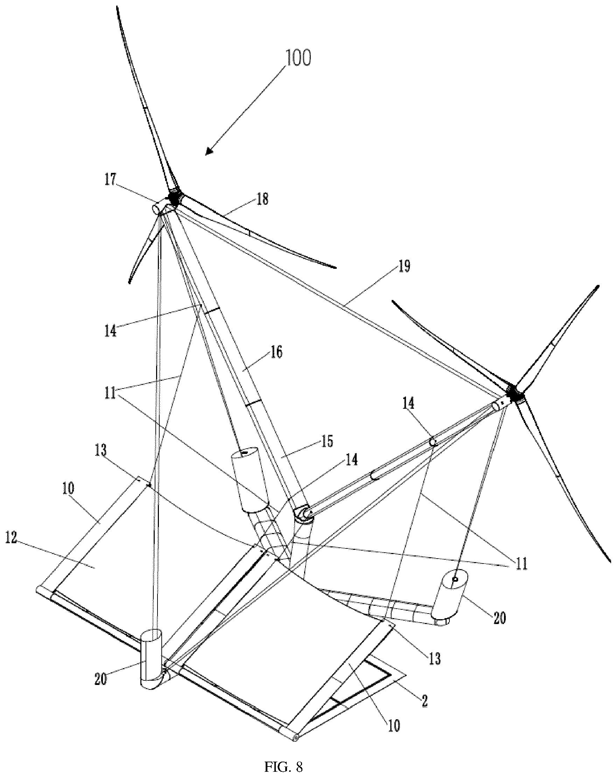

Referring to FIG. 8, in this embodiment, the frames 10 can be mounted on the left and right sides of each sub-board of the wind deflector 1, respectively. The steel cable connection points 13 are respectively provided on each frame 10, a plurality of the steel cable through hole 14 are provided on the airfoil arm 15. A hoisting mechanism (not shown) is mounted in the airfoil arm 15. One end of each steel cable 11 is connected to the frames 10 on both sides of each sub-board of the wind deflector 1, and the other end of each steel cable 11 reaches corresponding position of the tower 23 of the wind turbine 100 in a vertical plane parallel to the wind direction, and enters the inside of the tower 23 along the corresponding steel cable though hole 14 of the airfoil arm 15 to be connected to the hoisting mechanism, thereby driving the steel cable 11 through the hoist.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

## Claims

1. A floating wind turbine, comprising: a wind deflector, a floating board, an angle adjustment mechanism, a floating foundation, and a tower, wherein the floating foundation is provided with a mounting position, the tower is mounted to the mounting position and the tower is provided with a wind rotor, the floating board is substantially horizontally mounted to the floating foundation, the wind deflector is hinged to the floating board, an opening between the wind deflector and the floating board faces the tower, and the angle adjustment mechanism is operably connected to the wind deflector to adjust an angle between the wind deflector and the floating board.

2. The floating wind turbine according to claim 1, wherein
the wind deflector comprises two or more sub-boards, and each of the sub-boards is hinged to the floating board;
the angle adjustment mechanism comprises two or more sub-angle adjustment mechanisms, and each of the sub-boards is operably connected to the corresponding sub-angle adjustment mechanism.

3. The floating wind turbine according to claim 2, wherein
the tower is an airfoil tower, the airfoil tower comprises a support arm, a first airfoil arm and a second airfoil arm provided at an upper end of the support arm, a lower end of the support arm is mounted on the mounting position;
the wind rotor comprises a first wind rotor provided on the first airfoil arm and a second wind rotor provided on the second airfoil arm;
the wind deflector comprises a first sub-board and a second sub-board, the first sub-board and the second sub-board are respectively hinged to the floating board, the first sub-board corresponds to the first wind rotor, the second sub-board corresponds to the second wind rotor;
the angle adjustment mechanism comprises a first sub-angle adjustment mechanism and a second sub-angle adjustment mechanism, the first sub-angle adjustment mechanism is operably connected to the first sub-board to adjust the angle between the first sub-board and the floating board, the second sub-angle adjustment mechanism is operably connected to the second sub-board to adjust the angle between the second sub-board and the floating board.

4. The floating wind turbine according to claim 3, wherein the floating foundation comprises a first floating arm, a second floating arm, and a third floating arm that are connected in a Y shape, a length of the first floating arm is greater than that of the second floating arm or the third floating arm, the mounting position is provided at a joint of the first floating arm, the second floating arm, and the third floating arm, the tower is mounted on the mounting position obliquely.

5. The floating wind turbine according to claim 4, wherein
the floating board is mounted to the first floating arm, the floating board is arranged symmetrically with respect to the first floating arm such that the floating board comprises a first floating board area located on one side of the first floating arm and a second floating board area located on the other side of the first floating arm;
the first sub-board is hinged to the first floating board area through a first hinge shaft, and the second sub-board is hinged to the second floating board area through a second hinge shaft.

6. The floating wind turbine according to claim 5, wherein the first hinge shaft and the second hinge shaft are coaxially arranged.

7. The floating wind turbine according to claim 1, further comprising at least one first buoy mounted below the floating board.

8. The floating wind turbine according to claim 1, wherein the floating board comprises a plurality of flat boards arranged uniformly and coplanarly.

9. The floating wind turbine according to claim 1, wherein the angle between the wind deflector and the floating board is in a range from 10° to 50°.

10. The floating wind turbine according to claim 1, wherein
the angle adjustment mechanism is mounted between the floating board and the wind deflector, the angle adjustment mechanism comprises a hydraulic cylinder, a base, a connecting block, a first support rod, and a second support rod;
the base is mounted to a hinge shaft between the wind deflector and the floating board, the hydraulic cylinder is mounted to the base, a telescopic rod of the hydraulic cylinder faces the tower, the connecting block is mounted to the telescopic rod of the hydraulic cylinder, both ends of the first support rod are hinged to the connecting block and the floating board, respectively, both ends of the second support rod are hinged to the connecting block and wind deflector, respectively.

11. The floating wind turbine according to claim 10, wherein a plurality of the hydraulic cylinders, the connecting blocks, the first support rods, and the second support rods are provided, the plurality of hydraulic cylinders are connected in sequence, the connecting block is fixed to the telescopic rod of each hydraulic cylinder, each of the connecting blocks is connected to the floating board and the wind deflector through the corresponding first support rod and the second support rod.

12. The floating wind turbine according to claim 10, wherein each of the sub-boards is a flat board or a curved board.

13. The floating wind turbine according to claim 1, wherein
the angle adjustment mechanism is mounted between the tower and the wind deflector, and the angle adjustment mechanism comprises a frame, a steel cable, and a hoist;
the frame is mounted to both sides of the wind deflector, a first side of the frame is hinged to the floating board, a second side of the frame opposite to the first side has a steel cable connection point;
the tower is provided with a steel cable through hole corresponding to the steel cable connection point, the hoist is mounted in the tower, one end of the steel cable is fixed to the steel cable connection point, the other end of the steel cable extends though the steel cable through hole and is connected to the hoist.

14. The floating wind turbine according to claim 13, wherein the wind deflector is made of canvas material.

15. The floating wind turbine according to claim 1, further comprising an engine room and the wind rotor, the engine room is mounted to an end of the tower respectively, the wind rotor is mounted to an end of the engine room away from the wind deflector.
